# EUROPEAN PATENT APPLICATION

(11) **EP 4 386 742 A1**
(43) Date of publication of application: **19.06.2024**
(21) Application number: 23214139.0
(22) Date of filing: 05.12.2023
(51) Int. Cl.: G10K 11/172

(54) **HONEYCOMB CORE ASSEMBLY WITH MULTIPLE BARRIERS**

(30) Priority: 14.12.2022 US 202218080968
(71) Applicant: Safran Cabin Inc., Huntington Beach, CA 92647 (US)
(72) Inventor: Biswas, Bhaskar, Huntington Beach, 92647 (US)
(74) Representative: Gevers & Orès

(57) **Abstract**

Described are honeycomb core assemblies for a passenger vehicle. A honeycomb core assembly may include cells, a first barrier, and a second barrier. Each cell of the cells may define a cell interior and may include an open top and an open bottom. The first barrier may span the cell interior of a first cell of the cells. The second barrier may span the cell interior of the first cell of the cells. The first barrier may be positioned at a first location within the cell interior between the open top and the open bottom of the first cell. The second barrier may be positioned at a second location within the cell interior between the open top and the open bottom.

## Description

### FIELD OF THE INVENTION

The field of the invention relates to passenger vehicles, and, more particularly, to a honeycomb core assembly for a passenger vehicle, the honeycomb core assembly including multiple barriers.

### BACKGROUND

Passenger vehicles, such as airplanes, automobiles, and the like often include walls, partitions, or other structural features. The structural features may include various designs, arrangements, and materials. Oftentimes, passenger vehicles may generate excessive amounts of noise, such as from an airplane engine, or entities on the passenger vehicles may also generate excessive amounts of noise such as via loud conversations, etc. The excessive noise may be detrimental to some entities using the passenger vehicles. For example, a particular entity may wish to sleep, read, or otherwise engage in a quiet activity. Existing passenger vehicles may not facilitate the quiet activity due to the design, arrangement, and/or material of the structural features of the existing passenger vehicles.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

According to certain embodiments of the present invention, a honeycomb core assembly may be provided for a passenger vehicle. The honeycomb core assembly may include cells, i.e. a plurality of cells, a first barrier, and a second barrier. Each cell of the cells may define a cell interior and may include an open top and an open bottom. The first barrier may span the cell interior of a first cell of the cells. The second barrier may span the cell interior of the first cell of the cells. The first barrier may be positioned at a first location within the cell interior between the open top and the open bottom of the first cell, and the second barrier may be positioned at a second location within the cell interior between the open top and the open bottom of the first cell.

In some embodiments, each cell of the cells may include the first barrier and the second barrier.

In certain embodiments, at least one cell of the cells does not include the first barrier and the second barrier.

In some embodiments, at least one of the first barrier or the second barrier may include a resinous adhesive or a foaming adhesive.

In certain embodiments, at least one of the first barrier or the second barrier may include at least one of a noise suppressing chemical, a stiffener, or a fire retardant additive.

In some embodiments, the first barrier may be a top barrier within the cell interior, and the second barrier may be a bottom barrier within the cell interior.

In certain embodiments, the top barrier may be a noise insulation barrier, and the bottom barrier may be an electromagnetic shielding barrier.

In some embodiments, the honeycomb core assembly may additionally include a third barrier that may span the cell interior of the first cell. The third barrier may be positioned at a third location within the cell interior between the open top and the open bottom of the first cell.

In certain embodiments, the third barrier may include a perforation, gap, or slit.

In some embodiments, each of the first barrier, the second barrier, and the third barrier may include a perforation, gap, or slit.

In some embodiments, at least one of the first barrier or the second barrier may include a perforation, gap, or slit.

In various embodiments, both the first barrier and the second barrier may include a perforation, gap, or slit.

In various embodiments, the perforation, gap, or slit of the first barrier may be vertically misaligned with the perforation, gap, or slit of the second barrier.

In certain embodiments, a shape of the perforation, gap, or slit of the first barrier may be different from the shape of the perforation, gap, or slit of the second barrier.

In some embodiments, a wall of a cabin structure or a nacelle of an aircraft propulsion system for an aircraft may include the honeycomb core assembly. Other wall assemblies on or within the aircraft may include the honeycomb core assembly.

According to certain embodiments of the present invention, a honeycomb core assembly may be provided for a passenger vehicle. The honeycomb core assembly may include cells, a first barrier, and a second barrier. Each cell of the cells may define a cell interior and may comprise an open top and an open bottom. The first barrier may span the cell interior of a first cell of the cells, and the second barrier may span the cell interior of the first cell. At least one of the first barrier or the second barrier may be a noise insulation barrier.

In some embodiments, the honeycomb core assembly may additionally include a third barrier that may span the cell interior of the first cell. At least one of the first barrier, the second barrier, or the third barrier may include a perforation, gap, or slit.

According to certain embodiments of the present invention, a honeycomb core assembly may be provided for a passenger vehicle. The honeycomb core assembly may include cells, a first barrier, and a second barrier. Each cell of the cells may define a cell interior and may comprise an open top and an open bottom. The first barrier may span the cell interior of a first cell of the cells. The second barrier may span the cell interior of the first cell. At least one of the first barrier or the second barrier may include a perforation, gap, or slit.

In some embodiments, both the first barrier and the second barrier may include the perforation, gap, or slit.

In certain embodiments, the honeycomb core assembly may additionally include a third barrier that may span the cell interior of the first cell.

### BRIEF DESCRIPTION OF THE DRAWINGS

FIG. 1 is a schematic of a honeycomb core assembly, according to certain embodiments of the present invention.
FIG. 2A is a schematic of a honeycomb core assembly with multiple barriers, according to certain embodiments of the present invention.
FIG. 2B illustrates a cell of the honeycomb core assembly of FIG. 2A.
FIG. 3 is a schematic of a set of cells of the honeycomb core assembly of FIG. 2A.
FIG. 4 is a schematic of a pair of cells, which include barriers with an opening, of the honeycomb core assembly of FIG. 2A.
FIG. 5 is a schematic of a set of cells, which include barriers with aligned openings, of the honeycomb core assembly of FIG. 2A.
FIG. 6 is a schematic of a set of cells, which include barriers with misaligned openings, of the honeycomb core assembly of FIG. 2A.
FIG. 7 is a schematic of various configurations of a set of cells, which include three barriers, of the honeycomb core assembly of FIG. 2A.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The described embodiments of the invention provide honeycomb core assemblies for a passenger vehicle. While the honeycomb core assemblies are discussed for use with passenger vehicles, they are by no means so limited. Rather, embodiments of the honeycomb core assemblies may be used in passenger vehicles of any type or otherwise as desired.

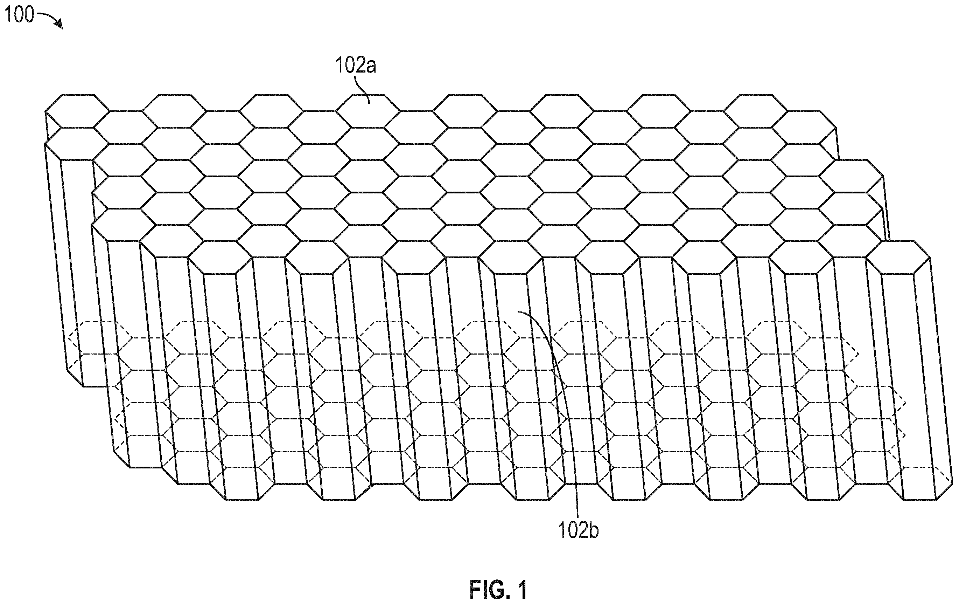

FIG. 1 is a schematic of a honeycomb core assembly 100, according to certain embodiments of the present invention. As illustrated, the honeycomb core assembly 100 includes a set of cells such as first cell 102a and second cell 102b. The honeycomb core assembly 100 may include any suitable additional number (e.g., one, two, three, four, or more) of cells 102 for providing a threshold amount of strength or rigidity for a structure of a passenger vehicle. For example, the honeycomb core assembly 100 may include a total number of cells 102 for providing strength or rigidity to a wall of an aircraft, passenger train, or the like.

In some embodiments, the honeycomb core assembly 100 may be positioned in other passenger vehicles and may not be optimized. For example, the honeycomb core assembly 100 may include cells 102 that are hollow or otherwise do not include features for reducing sound waves. The cells 102 of the honeycomb core assembly 100 may transmit or even amplify sound traveling in the cells 102. Transmitting or amplifying sound or other auditory waves may be undesirable since passenger vehicles, such as buses, aircraft, watercraft, and the like, that include the honeycomb core assembly 100 in one or more structures oftentimes produce loud noises, for example via engine noises, noises from a velocity of the passenger vehicles, etc.

A honeycomb core assembly 200 that includes multiple barriers in each cell, or a subset of cells, of a set of cells 202 may provide various improvements in performance over the honeycomb core assembly 100. For example, the honeycomb core assembly 200 may provide sound suppression (e.g., acoustic dampening) improvements compared to sound suppression of the honeycomb core assembly 100. Additionally, the honeycomb core assembly 200 may provide electromagnetic shielding improvements compared to electromagnetic shielding provided by the honeycomb core assembly 100. In some embodiments, the honeycomb core assembly 200 may be installed in, or otherwise positioned in, a wall of a cabin structure for an aircraft. Additionally, or alternatively, the honeycomb core assembly 200 may be installed in and/or form a panel for a nacelle of an aircraft propulsion unit. In such embodiments, the nacelle, which houses an engine or a turbojet engine, may utilize a panel formed from the honeycomb core assembly 200 to limit the propagation of noise generated by the engine or by any other noisy member housed within the nacelle and/or to provide electromagnetic shielding. In other embodiments, other walls or panels provided on or in various components of the aircraft may include the honeycomb core assembly 200

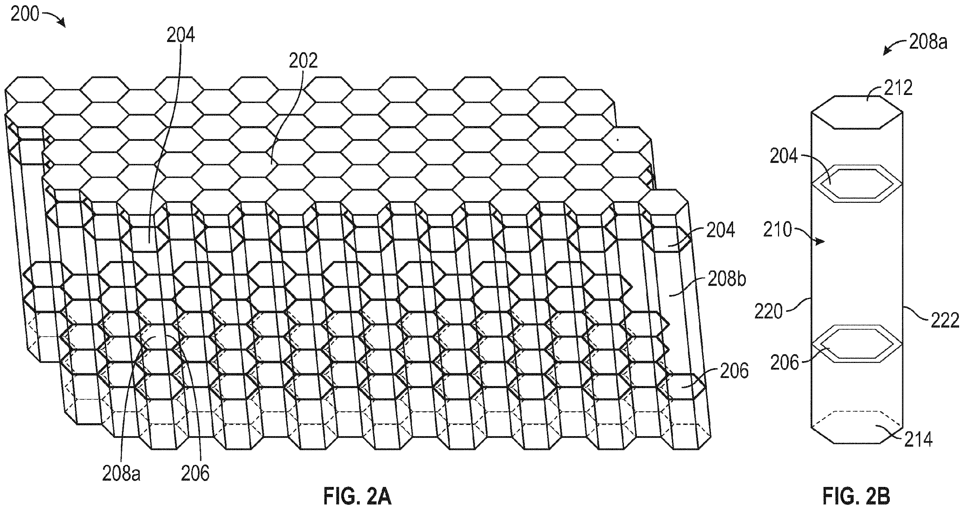

According to certain embodiments of the present invention, and as best shown in FIGS. 2A-B and 3-7, a honeycomb core assembly 200 includes a set of cells 202, a first barrier 204, and a second barrier 206. The set of cells 202 may include any suitable number (e.g., one, two, three, four, or more) of cells, and examples of cells of the set of cells 202 may include first cell 208a and second cell 208b. Each cell, or any subset, of the set of cells 202 may define a cell interior 210 and may include an open top 212 and an open bottom 214. The cells 208 may have various shapes as desired. As non-limiting examples, each cell may be hexagonal in cross-section, circular in cross-section, octagonal in cross-section, or the like. Moreover, in certain embodiments, a set of cells may include a plurality of different shapes. As non-limiting examples, some cells may be heaxagonal and other cells may be circular. In some embodiments, each cell of the set of cells 202 may include the first barrier 204 and the second barrier 206. In other embodiments, at least one cell of the set of cells 202 may not include the first barrier 204 and the second barrier 206. For example, the first cell 208a may include the first barrier 204 and the second barrier 206, and the second cell 208b may include the first barrier 204 and not the second barrier 206, vice versa, or neither of the first barrier 204 and the second barrier 206.

In some embodiments, at least one of the first barrier 204 or the second barrier 206 may include a resinous adhesive or a foaming adhesive. For example, the first barrier 204 may be or include the resinous adhesive or the foaming adhesive, the second barrier 206 may be or include the resinous adhesive or the foaming adhesive, vice versa, or any combination thereof. In some embodiments, at least one of the first barrier 204 or the second barrier 206 may include at least one of a noise suppressing chemical, a stiffener, or a fire retardant additive. For example, the first barrier 204 may be or include the noise suppressing chemical, the stiffener, or the fire retardant additive, the second barrier 206 may be or include the noise suppressing chemical, the stiffener, or the fire retardant additive, vice versa, or any combination thereof.

As best illustrated with respect to FIG. 2B, the first barrier 204 may span the cell interior 210 of the first cell 208a of the set of cells 202, and the first barrier 204 may be positioned at a first location within the cell interior 210 and between the open top 212 and the open bottom 214. Additionally, the second barrier 206 may span the cell interior 210 of the first cell 208a, and the second barrier 206 may be positioned at a second location within the cell interior 210 and between the open top 212 and the open bottom 214. In some embodiments, spanning the cell interior 210 may involve the first barrier 204 and/or the second barrier 206 extending from a first end 220 of the cell interior 210 to a second end 222 of the cell interior 210. Additionally, the first barrier 204 may be longitudinally offset from the second barrier 206 with respect to the first cell 208a.

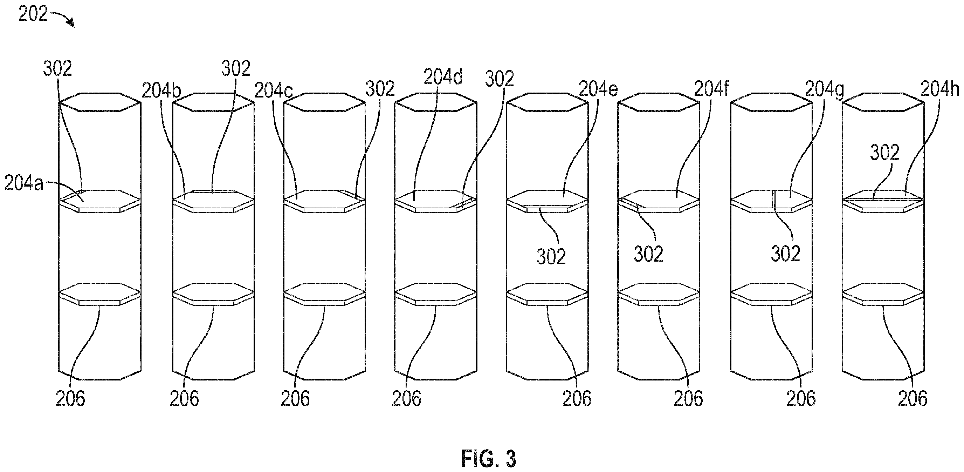

As best illustrated with respect to FIGS. 3-6, the first barrier 204 may be a top barrier within the cell interior 210, and the second barrier 206 may be a bottom barrier within the cell interior 210. For example, and as illustrated in FIG. 3, first barriers 204a-h are top barriers for each cell of the set of cells 202, and the second barriers 206 are bottom barriers for each cell of the set of cells 202. Additionally, each first barrier 204 of the first barriers 204a-h are longitudinally offset from a corresponding second barrier 206. In some embodiments, the first barrier 204 may be positioned at a first end (e.g., proximate to the open top 212) of a respective cell, and the second barrier 206 may be positioned at a second end (e.g., proximate to the open bottom 214) of the respective cell.

In some embodiments, the top barrier and/or the bottom barrier may be a noise insulation barrier. For example, the first barriers 204a-h and/or the second barriers 206 may be a noise insulation barrier that can reduce auditory waves traversing the respective cell of the set of cells 202. In other embodiments, at least one of the top barrier or the bottom barrier may be an electromagnetic shielding barrier. For example, the first barriers 204a-h, or the second barriers 206 may provide electromagnetic shielding for the honeycomb core assembly 200.

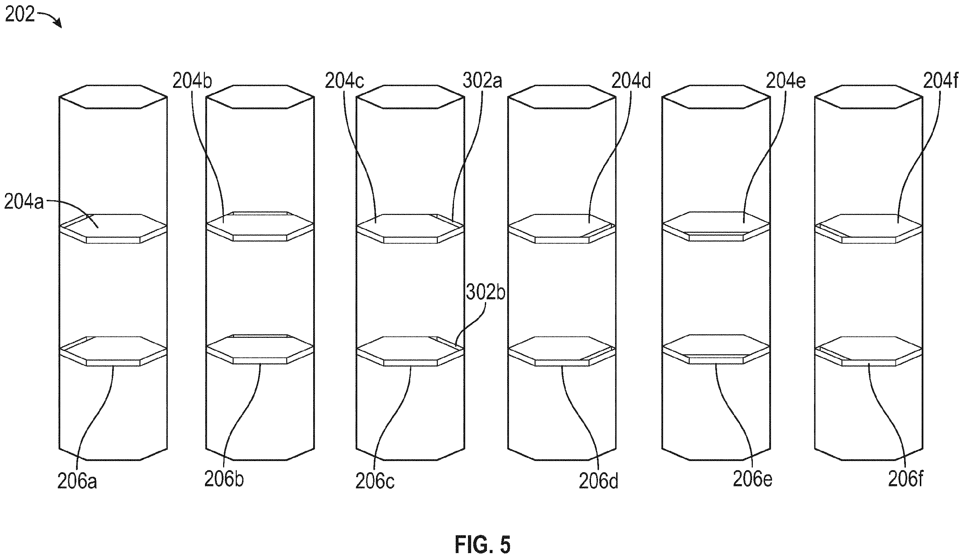

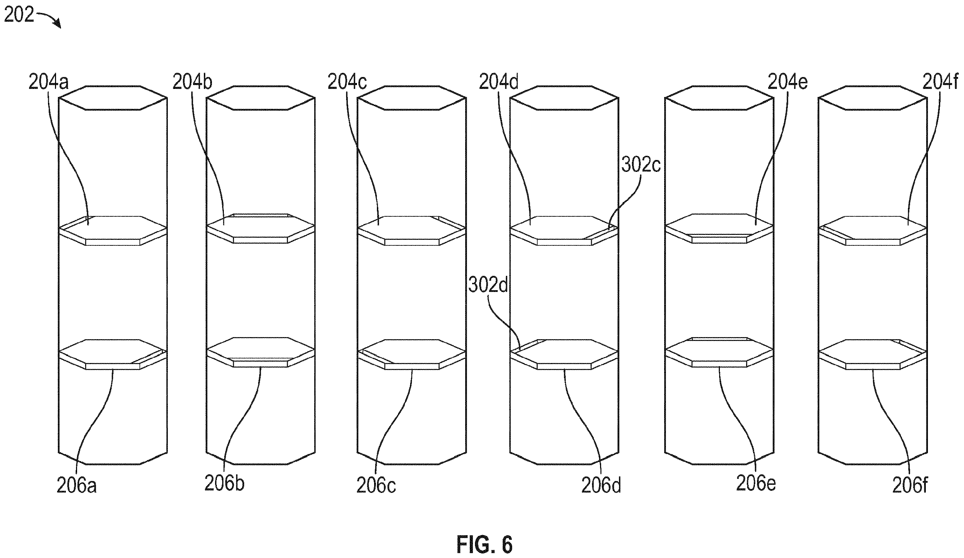

As best illustrated with respect to FIGS. 3-6, at least one of the first barrier 204 or the second barrier 206 may include one or more openings 302. In some embodiments, both the first barrier 204 and the second barrier 206 may include at least one opening 302. The opening 302 may include a perforation, a gap, a slit, or any other suitable opening for the first barrier 204 or the second barrier 206. When included in both the first barrier 204 and the second barrier 206, the openings 302 may have a similar shape, size, number, position, etc., although they need not in other embodiments, as a non-limiting example, the opening 302 of the first barrier 204 may be vertically (e.g., longitudinally) aligned or vertically misaligned with the opening 302 of the second barrier 206. For example, and as illustrated with respect to FIG. 5, opening 302a of first barrier 204c may be vertically aligned with opening 302b of second barrier 206c. In another example, and as illustrated with respect to FIG. 6, opening 302c of first barrier 204d is vertically misaligned with opening 302d of second barrier 206d. Being vertically, or longitudinally, misaligned may involve adjacent openings being rotationally offset, translationally offset, or otherwise offset from one another. For example, a straight line may not be able to be drawn between a common point on vertically misaligned openings.

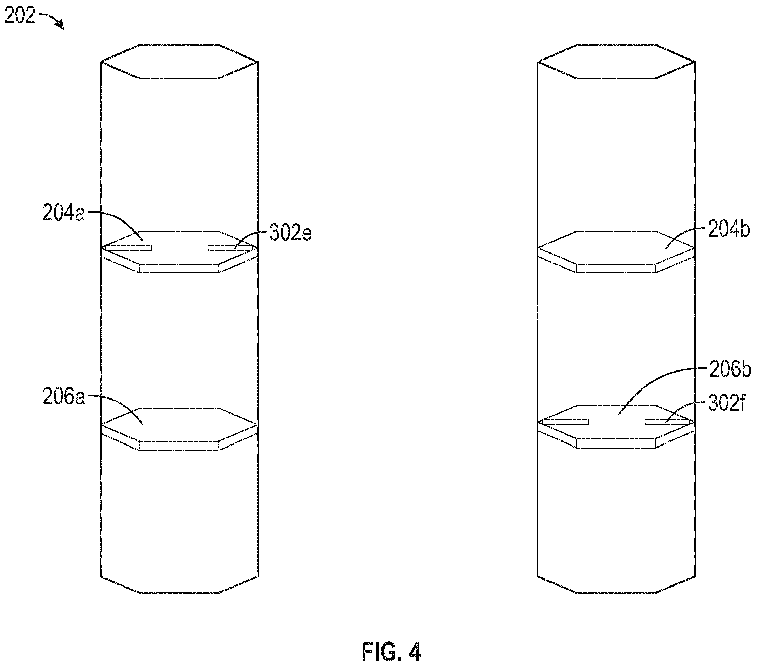

In some embodiments, a shape of the opening 302 of the first barrier 204 may not be identical or similar to a shape of the opening 302 of the second barrier 206. For example, and as illustrated with respect to FIGS. 4 and 6, openings 302c-d are a first shape (e.g., a continuous line), and openings 302e-f are a second shape (e.g., a broken line), though other suitable shapes may be used for the openings 302.

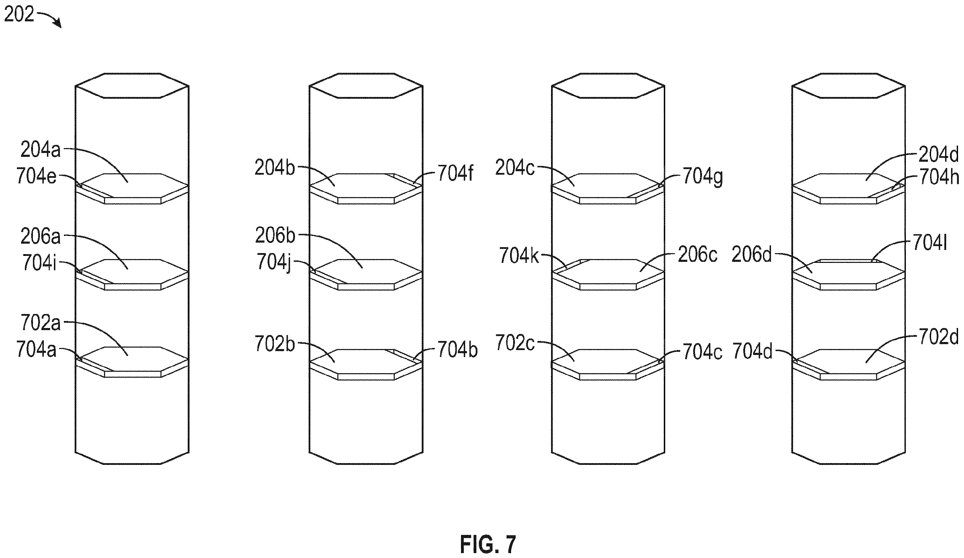

As best illustrated with respect to FIG. 7, each cell, or a subset, of the set of cells 202 may include a third barrier 702. For example, the cells of the set of cells 202 may include third barriers 702a-d that may span the cell interior 210 of the respective cells of the set of cells 202. The third barriers 702a-d may be positioned at a third location within the cell interior 210 and between the open top 212 and the open bottom 214 of the respective cell. Additionally, the third barrier 702 may include an opening 704. For example, and as illustrated, the third barriers 702a-d include openings 704a-d that may provide enhanced noise insulation performance, or other benefits, for the third barriers 702a-d. The opening 704 may include a perforation, a gap, a slit, or any other suitable opening for the third barrier 702.

In some embodiments, each of the first barrier 204, the second barrier 206, and the third barrier 702 may include an opening 704. For example, and as illustrated in FIG. 7, the third barriers 702a-d include the openings 704a-d, the first barriers 204a-d include openings 704e-h, and the second barriers 206a-d include openings 704i-l. The openings 704a-l may each be a perforation, a slit, a gap, or any other suitable opening for the respective barrier. In some embodiments, openings of adjacent barriers may be aligned, misaligned, or a combination thereof. For example, and as illustrated with respect to FIG. 7, opening 704e of first barrier 204a is aligned with opening 704i of second barrier 206a and opening 704a of third barrier 702a. In another example, opening 704g of first barrier 204c is misaligned (e.g., positioned opposite) with opening 704k of second barrier 206c but aligned with opening 704c of third barrier 702c. In yet another example, opening 704h of first barrier 204d is misaligned (e.g., rotated) with opening 7041 of second barrier 206d and opening 704d of third barrier 702d.

Additionally, the honeycomb core assembly 200, or any component thereof, may include various metals or metallic elements as desired, including but not limited to aluminum, an aluminum alloy, titanium, a titanium alloy, nickel, a nickel alloy, brass, a brass alloy, steel, a steel alloys, stainless steel or a stainless steel alloy combinations thereof, or any other suitable metal or metallic alloy. In other non-limiting examples, the honeycomb core assembly 200, or any component thereof, includes other types of metallic elements, such as titanium, zinc, and the like, or metallic alloys such as titanium alloys, zinc alloys, and the like. In some embodiments, the honeycomb core assembly 200 may include non-metallic elements such as rubber, polymer, plastics, cardboard, paper, or the like.

In the following, further examples are described to facilitate the understanding of the invention:
Example 1. A honeycomb core assembly comprising: a plurality of cells, each cell of the plurality of cells defining a cell interior and comprising an open top and an open bottom; a first barrier spanning the cell interior of a first cell of the plurality of cells; and a second barrier spanning the cell interior of the first cell of the plurality of cells, wherein the first barrier is at a first location within the cell interior between the open top and the open bottom of the first cell of the plurality of cells and the second barrier is at a second location within the cell interior between the open top and the open bottom of the first cell of the plurality of cells.
Example 2. The honeycomb core assembly of any of the preceding or subsequent examples, wherein each cell of the plurality of cells comprises the first barrier and the second barrier.
Example 3. The honeycomb core assembly of any of the preceding or subsequent examples, wherein at least one cell of the plurality of cells does not include the first barrier and the second barrier.
Example 4. The honeycomb core assembly of any of the preceding or subsequent examples, wherein at least one of the first barrier or the second barrier comprises a resinous adhesive or a foaming adhesive.
Example 5. The honeycomb core assembly of any of the preceding or subsequent examples, wherein at least one of the first barrier or the second barrier comprises at least one of a noise suppressing chemical, a stiffener, or a fire retardant additive.
Example 6. The honeycomb core assembly of any of the preceding or subsequent examples, wherein the first barrier is a top barrier within the cell interior and the second barrier is a bottom barrier within the cell interior.
Example 7. The honeycomb core assembly of any of the preceding or subsequent examples, wherein the top barrier is a noise insulation barrier and the bottom barrier is an electromagnetic shielding barrier.
Example 8. The honeycomb core assembly of any of the preceding or subsequent examples, further comprising a third barrier spanning the cell interior of the first cell of the plurality of cells, the third barrier at a third location within the cell interior between the open top and the open bottom of the first cell of the plurality of cells.
Example 9. The honeycomb core assembly of any of the preceding or subsequent examples, wherein the third barrier comprises a perforation, gap, or slit.
Example 10. The honeycomb core assembly of any of the preceding or subsequent examples, wherein each of the first barrier, the second barrier, and the third barrier comprises a perforation, gap, or slit.
Example 11. The honeycomb core assembly of any of the preceding or subsequent examples, wherein at least one of the first barrier or the second barrier comprises a perforation, gap, or slit.
Example 12. The honeycomb core assembly of any of the preceding or subsequent examples, wherein both the first barrier and the second barrier comprise a perforation, gap, or slit.
Example 13. The honeycomb core assembly of any of the preceding or subsequent examples, wherein the perforation, gap, or slit of the first barrier is vertically misaligned with the perforation, gap, or slit of the second barrier.
Example 14. The honeycomb core assembly of any of the preceding or subsequent examples, wherein a shape of the perforation, gap, or slit of the first barrier is different from the shape of the perforation, gap, or slit of the second barrier.
Example 15. A wall of a cabin structure for an aircraft or a nacelle of an aircraft propulsion system comprising the honeycomb core assembly of any of the preceding or subsequent examples.
Example 16. A honeycomb core assembly comprising: a plurality of cells, each cell of the plurality of cells defining a cell interior and comprising an open top and an open bottom; a first barrier spanning the cell interior of a first cell of the plurality of cells; and a second barrier spanning the cell interior of the first cell of the plurality of cells, wherein at least one of the first barrier or the second barrier is a noise insulation barrier.
Example 17. The honeycomb core assembly of any of the preceding or subsequent examples, further comprising a third barrier spanning the cell interior of the first cell of the plurality of cells, wherein at least one of the first barrier, the second barrier, or the third barrier comprises a perforation, gap, or slit.
Example 18. A honeycomb core assembly comprising: a plurality of cells, each cell of the plurality of cells defining a cell interior and comprising an open top and an open bottom; a first barrier spanning the cell interior of a first cell of the plurality of cells; and a second barrier spanning the cell interior of the first cell of the plurality of cells, wherein at least one of the first barrier or the second barrier comprises a perforation, gap, or slit.
Example 19. The honeycomb core assembly of any of the preceding or subsequent examples, wherein both the first barrier and the second barrier comprise the perforation, gap, or slit.
Example 20. The honeycomb core assembly of any of the preceding or subsequent examples, further comprising a third barrier spanning the cell interior of the first cell of the plurality of cells.

Different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

The use of the terms "a" and "an" and "the" and similar referents in the context of describing the invention (especially in the context of the following claims) are to be construed to cover both the singular and the plural, unless otherwise indicated herein or clearly contradicted by context. Directional references such as "up," "down," "top," "bottom," "left," "right," "front," and "back," among others, are intended to refer to the orientation as illustrated and described in the FIG. (or figures) to which the components and directions are referencing. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, or gradients thereof, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, the nearness of completion will be so as to have the same overall result as if absolute and total completion were obtained.

Preferred embodiments of this invention are described herein, including the best mode known to the inventors for carrying out the invention. The invention is susceptible to various modifications and alternative constructions, and certain shown exemplary embodiments thereof are shown in the drawings and have been described above in detail. Variations of those preferred embodiments, within the spirit of the present invention, may become apparent to those of ordinary skill in the art upon reading the foregoing description. The inventors expect skilled artisans to employ such variations as appropriate, and the inventors intend for the invention to be practiced otherwise than as specifically described herein. Accordingly, it should be understood that there is no intention to limit the invention to the specific form or forms disclosed, but on the contrary, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

## Claims

1. A honeycomb core assembly (100, 200) comprising:
a plurality of cells (102, 202, 208), each cell of the plurality of cells (102, 202, 208) defining a cell interior (210) and comprising an open top (212) and an open bottom (214);
a first barrier (204, 204a, 204c, 204d) spanning the cell interior (210) of a first cell (102a, 208a) of the plurality of cells (102, 202, 208); and
a second barrier (206, 206a, 206c, 206d) spanning the cell interior (210) of the first cell (102a, 208a) of the plurality of cells (102, 202, 208),
wherein the first barrier (204, 204a, 204c, 204d) is at a first location within the cell interior (210) between the open top (212) and the open bottom (214) of the first cell (102a, 208a) of the plurality of cells (102, 202, 208) and the second barrier (206, 206a, 206c, 206d) is at a second location within the cell interior (210) between the open top (212) and the open bottom (214) of the first cell (102a, 208a) of the plurality of cells (102, 202, 208).

2. The honeycomb core assembly (100, 200) of claim 1, wherein each cell of the plurality of cells (102, 202, 208) comprises the first barrier (204, 204a, 204c, 204d) and the second barrier (206, 206a, 206c, 206d).

3. The honeycomb core assembly (100, 200) of claim 1, wherein at least one cell of the plurality of cells (102, 202, 208) does not include the first barrier (204, 204a, 204c, 204d) and the second barrier (206, 206a, 206c, 206d).

4. The honeycomb core assembly (100, 200) of any one of preceding claims, wherein at least one of the first barrier (204, 204a, 204c, 204d) or the second barrier (206, 206a, 206c, 206d) comprises a resinous adhesive, a foaming adhesive, a noise suppressing chemical, a stiffener, or a fire retardant additive.

5. The honeycomb core assembly (100, 200) of any one of preceding claims, wherein the first barrier (204, 204a, 204c, 204d) is a top barrier within the cell interior (210) and the second barrier (206, 206a, 206c, 206d) is a bottom barrier within the cell interior (210).

6. The honeycomb core assembly (100, 200) of claim 5, wherein the top barrier is a noise insulation barrier and the bottom barrier is an electromagnetic shielding barrier.

7. The honeycomb core assembly (100, 200) of any one of preceding claims, further comprising a third barrier (702, 702a, 702c, 702d) spanning the cell interior (210) of the first cell (102a, 208a) of the plurality of cells (102, 202, 208), the third barrier (702, 702a, 702c, 702d) at a third location within the cell interior (210) between the open top (212) and the open bottom (214) of the first cell (102a, 208a) of the plurality of cells (102, 202, 208).

8. The honeycomb core assembly (100, 200) of any one of preceding claims, wherein at least one of the first barrier (204, 204a, 204c, 204d) and the second barrier (206, 206a, 206c, 206d) comprises a perforation, gap, or slit.

9. The honeycomb core assembly (100, 200) of claim 8, wherein both the first barrier (204, 204a, 204c, 204d) and the second barrier (206, 206a, 206c, 206d) comprise a perforation, gap, or slit.

10. The honeycomb core assembly (100, 200) of claim 9, wherein the perforation, gap, or slit of the first barrier (204, 204a, 204c, 204d) is vertically misaligned with the perforation, gap, or slit of the second barrier (206, 206a, 206c, 206d).

11. The honeycomb core assembly (100, 200) of claim 8 or 9, wherein a shape of the perforation, gap, or slit of the first barrier (204, 204a, 204c, 204d) is different from the shape of the perforation, gap, or slit of the second barrier (206, 206a, 206c, 206d).

12. A wall of a cabin structure for an aircraft or a nacelle of an aircraft propulsion system comprising the honeycomb core assembly (100, 200) of any one of preceding claims.

13. A honeycomb core assembly (100, 200) comprising:
a plurality of cells (102, 202, 208), each cell of the plurality of cells (102, 202, 208) defining a cell interior (210) and comprising an open top (212) and an open bottom (214);
a first barrier (204, 204a, 204c, 204d) spanning the cell interior (210) of a first cell (102a, 208a) of the plurality of cells (102, 202, 208); and
a second barrier (206, 206a, 206c, 206d) spanning the cell interior (210) of the first cell (102a, 208a) of the plurality of cells (102, 202, 208),
wherein at least one of the first barrier (204, 204a, 204c, 204d) or the second barrier (206, 206a, 206c, 206d) is a noise insulation barrier.

14. The honeycomb core assembly (100, 200) of claim 13, further comprising a third barrier (702, 702a, 702c, 702d) spanning the cell interior (210) of the first cell (102a, 208a) of the plurality of cells (102, 202, 208), wherein at least one of the first barrier (204, 204a, 204c, 204d), the second barrier (206, 206a, 206c, 206d), or the third barrier (702, 702a, 702c, 702d) comprises a perforation, gap, or slit.

15. A honeycomb core assembly (100, 200) comprising:
a plurality of cells (102, 202, 208), each cell of the plurality of cells (102, 202, 208) defining a cell interior (210) and comprising an open top (212) and an open bottom (214);
a first barrier (204, 204a, 204c, 204d) spanning the cell interior (210) of a first cell (102a, 208a) of the plurality of cells (102, 202, 208); and
a second barrier (206, 206a, 206c, 206d) spanning the cell interior (210) of the first cell (102a, 208a) of the plurality of cells (102, 202, 208),
wherein at least one of the first barrier (204, 204a, 204c, 204d) or the second barrier (206, 206a, 206c, 206d) comprises a perforation, gap, or slit.
